(19) **Europäisches Patentamt**
**European Patent Office**
**Office européen des brevets**

(11) **EP 4 741 777 A1**

(12) **EUROPÄISCHE PATENTANMELDUNG**

(43) Veröffentlichungstag:
**13.05.2026 Patentblatt 2026/20**

(51) Internationale Patentklassifikation (IPC):
***G01F 1/667*** *(2022.01)*

(21) Anmeldenummer: 24212133.3

(22) Anmeldetag: **11.11.2024**

(52) Gemeinsame Patentklassifikation (CPC):
**G01F 1/667; G01F 1/668**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **SICK AG**
**79183 Waldkirch (DE)**

(72) Erfinder:
• **Kuri, Florian**
**79215 Elzach (DE)**
• **Weigold, William**
**79268 Bötzingen (DE)**

(74) Vertreter: **Manitz Finsterwald**
**Patent- und Rechtsanwaltspartnerschaft mbB**
**Martin-Greif-Straße 1**
**80336 München (DE)**

(54) **ULTRASCHALLSENSORVORRICHTUNG**

(57)    Eine Ultraschallsensorvorrichtung zum Bestimmen einer Durchflussgeschwindigkeit eines Mediums umfasst einen Ultraschallwandler und eine Auswerteeinheit. Der Ultraschallwandler ist dazu ausgebildet, um ein erstes mit einem Medium übertragenes Ultraschallsignal zu einem ersten Zeitpunkt und ein zweites mit dem Medium übertragenes Ultraschallsignal zu einem zweiten Zeitpunkt zu empfangen. Die Auswerteeinheit ist dazu ausgebildet, eine Hüllkurve des ersten Ultraschallsignals und einen Phasenverlauf des zweiten Ultraschallsignals zu bestimmen. Die Auswerteeinheit ist ferner dazu ausgebildet, eine erste Laufzeit basierend auf der Hüllkurve des ersten Ultraschallsignals, eine zweite Laufzeit basierend auf dem Phasenverlauf des zweiten Ultraschallsignals und eine Durchflussgeschwindigkeit des Mediums basierend auf der ersten Laufzeit und der zweiten Laufzeit zu bestimmen.

Fig. 1

**Beschreibung**

Die Erfindung betrifft eine Ultraschallsensorvorrichtung und ein Verfahren zur Bestimmung einer Durchflussgeschwindigkeit eines Mediums.

Durchflussgeschwindigkeiten eines Mediums in einem Kanal oder in einer Rohrleitung können auf verschiedene Weisen ermittelt werden. Beispielsweise kann die Durchflussgeschwindigkeit mit Hilfe von Ultraschallsensoren bestimmt werden. Hierbei kann auf Basis einer Differenzlaufzeit zweier entgegengesetzt ausgesandter und empfangener Ultraschallsignale die Durchflussgeschwindigkeit des Mediums ermittelt werden. Die Genauigkeit der so ermittelten Durchflussgeschwindigkeit ist jedoch stark von der Qualität, insbesondere von der Bestimmung der zeitlichen Lage, der Ultraschallsignale abhängig.

Es ist daher die Aufgabe der hier vorliegenden Erfindung, eine Ultraschallsensorvorrichtung bereitzustellen, mit der die Bestimmung der Durchflussgeschwindigkeit eines Mediums verbessert werden kann.

Die Aufgabe wird durch eine Ultraschallsensorvorrichtung zum Bestimmen einer Durchflussgeschwindigkeit eines Mediums gemäß dem Anspruch 1, durch ein Verfahren nach Anspruch 10 zur Bestimmung der Durchflussgeschwindigkeit des Mediums mittels der Ultraschallsensorvorrichtung und durch ein Ultraschallsensorsystem mit den Merkmalen des Anspruchs 15 gelöst. Vorteilhafte Ausführungsformen der Ultraschallsensorvorrichtung und des Verfahrens sind in den Unteransprüchen, der Beschreibung und den Zeichnungen dargestellt.

Die erfindungsgemäße Ultraschallsensorvorrichtung dient zur Bestimmung einer Durchflussgeschwindigkeit eines Mediums. Die Ultraschallsensorvorrichtung umfasst einen Ultraschallwandler, der dazu ausgebildet ist, ein erstes in bzw. mit einem Medium übertragenes Ultraschallsignal zu einem ersten Zeitpunkt und ein zweites in bzw. mit dem Medium übertragenes Ultraschallsignal zu einem zweiten Zeitpunkt zu empfangen. Die Ultraschallsensorvorrichtung umfasst ferner eine Auswerteeinheit, die dazu ausgebildet ist, eine Hüllkurve, insbesondere nur, des ersten Ultraschallsignals zu bestimmen, einen Phasenverlauf, insbesondere nur, des zweiten Ultraschallsignals zu bestimmen, eine erste Laufzeit basierend auf der Hüllkurve des ersten Ultraschallsignals zu bestimmen, eine zweite Laufzeit basierend auf dem Phasenverlauf des zweiten Ultraschallsignals zu bestimmen und eine Durchflussgeschwindigkeit des Mediums basierend auf der ersten Laufzeit und der zweiten Laufzeit zu bestimmen.

Bei der erfindungsgemäßen Ultraschallsensorvorrichtung werden demnach zwei verschiedene Ultraschallsignale zur Bestimmung der Durchflussgeschwindigkeit des Mediums verwendet. Dabei werden die jeweiligen vorteilhaften Eigenschaften der zwei verschiedenen Ultraschallsignale ausgenutzt.

Das Medium kann ein Fluid, wie beispielsweise eine Flüssigkeit oder ein Gas, umfassen. Das Medium kann durch einen Kanal oder eine Rohrleitung mit der zu bestimmenden Durchflussgeschwindigkeit fließen bzw. strömen. Die Durchflussgeschwindigkeit kann angeben, wie schnell, also mit welcher Geschwindigkeit das Medium durch den Kanal oder die Rohrleitung fließt bzw. strömt.

Der Ultraschallwandler bzw. ein erster Ultraschallwandler kann als Sender oder Empfänger betrieben werden und ist demnach dafür ausgebildet sowohl Ultraschallsignale zu senden und zu empfangen. Das von dem Ultraschallwandler, oder einem anderen Ultraschallwandler, ausgesendete Ultraschallsignal kann durch das Medium übertragen werden. Dies kann bedeuten, dass das Ultraschallsignal durch das Medium hindurch von dem Ultraschallwandler zu einem anderen Ultraschallwandler übertragen werden kann.

Das erste Ultraschallsignal kann ein kurzes Ultraschallsignal im Vergleich zu dem zweiten Ultraschallsignal sein. Dies kann bedeuten, dass eine Sendedauer des ersten Ultraschallsignals kürzer ist als eine Sendedauer des zweiten Ultraschallsignals. Dies kann ferner bedeuten, dass das erst Ultraschallsignal schneller abklingt als das zweite Ultra-schallsignal. Insbesondere kann eine Anzahl von Sendepulsen des ersten Ultraschallsignals kleiner sein als eine Anzahl von Sendepulsen des zweiten Ultraschallsignals. Insbesondere kann die Anzahl von Sendepulsen des ersten Ultraschallsignals, bevorzugt zumindest, 10-mal kleiner, 5-mal kleiner oder 3-mal kleiner sein als die Anzahl von Sendepulsen des zweiten Ultraschallsignals. Alternativ oder zusätzlich kann die Sendedauer des zweiten Ultraschallsignals, insbesondere zumindest, 10-mal länger, 5-mal länger oder 3-mal länger sein als die Sendedauer des ersten Ultraschallsignals. Zudem kann ein Signalpegel des ersten Ultraschallsignals geringer sein als ein Signalpegel des zweiten Ultraschallsignals. Das erste Ultraschallsignal kann nur eine Signalperiode umfassen, wohingegen das zweite Ultraschallsignal eine Vielzahl von Signalperioden umfassen kann, insbesondere beliebig viele Signalperioden. Im Allgemeinen kann die Anzahl der Signalperioden des ersten Ultraschallsignals verschieden von der Anzahl der Signalperioden des zweiten Ultraschallsignals sein. Dementsprechend kann eine Anzahl von Nulldurchgängen eines Phasenverlaufs des ersten Ultraschallsignals geringer sein als eine Anzahl von Nulldurchgängen eines Phasenverlaufs des zweiten Ultraschallsignals.

Der erste Zeitpunkt bzw. der zweite Zeitpunkt können den jeweiligen Zeitpunkt angeben, an dem das erste Ultraschallsignal bzw. das zweite Ultraschallsignal von dem Ultraschallwandler empfangen werden. Es ist jedoch auch möglich, dass der erste Zeitpunkt eine Zeitdauer angibt während der das erste Ultraschallsignal von dem Ultraschallwandler empfangen wird und der zweite Zeitpunkt eine Zeitdauer während der das zweite Ultraschallsignal von dem Ultraschallwandler empfangen wird. Der erste Zeitpunkt kann insbesondere vor dem zweiten Zeitpunkt liegen. Folglich kann das erste Ultraschallsignal vor dem zweiten Ultraschallsignal von dem Ultraschallwandler empfangen werden.

Die Auswerteeinheit kann konfiguriert sein, ein erstes digitales Empfangssignal basierend auf dem ersten Ultraschallsignal und ein zweites digitales Empfangssignal basierend auf dem zweiten Ultraschallsignal zu erzeugen. Insbesondere kann die Hüllkurve des ersten Ultraschallsignals mittels der Auswerteeinheit auf Basis des ersten digitalen Empfangssignals bestimmt werden. Die Hüllkurve kann eine Einhüllende beschreiben, die einen Amplitudenverlauf des Ultraschallsignals umgibt, insbesondere einen positiven Amplitudenverlauf, der durch Betragsbildung ermittelt werden kann. Der Phasenverlauf des zweiten Ultraschallsignals kann mittels der Auswerteeinheit auf Basis des zweiten digitalen Empfangssignals bestimmt werden.

Die erste Laufzeit bzw. die zweite Laufzeit können angeben, wie viel Zeit von einem Aussenden bis zu einem Empfangen eines Ultraschallsignals vergeht. Die Laufzeit kann auch als Time-of-Flight (ToF) des jeweiligen Ultraschallsignals bezeichnet werden. Die zweite Laufzeit, die basierend auf dem Phasenverlauf des zweiten Ultraschallsignals bestimmt wird, kann genauer sein als die erste Laufzeit, die basierend auf der Hüllkurve des ersten Ultraschallsignals ermittelt wird.

In einer Ausführungsform umfasst die Ultraschallsensorvorrichtung ferner einen zweiten Ultraschallwandler, der dazu ausgebildet ist, das erste Ultraschallsignal und das zweite Ultraschallsignal auszusenden, wobei der Ultraschallwandler und der zweite Ultraschallwandler bevorzugt einander zugewandt angeordnet sind. Der erste Ultraschallwandler und der zweite Ultraschallwandler können insbesondere derart angeordnet sein, dass der erste Ultraschallwandler die Ultraschallsignale des zweiten Ultraschallwandlers empfangen kann, und umgekehrt.

Der zweite Ultraschallwandler kann ebenso wie der erste Ultraschallwandler konfiguriert sein. Der zweite Ultraschallwandler kann als Sender und Empfänger betrieben werden. Wird der zweite Ultraschallwandler als Empfänger betrieben, so kann mittels des zweiten Ultraschallwandlers die Bestimmung der Durchflussgeschwindigkeit des Mediums durchgeführt werden, wobei das erste Ultraschallsignal und das zweite Ultraschallsignal dann von dem ersten Ultraschallwandler ausgesendet und von dem zweiten Ultraschallwandler empfangen werden. Es ist auch eine Vielzahl von Ultraschallwandlern möglich.

In einer Ausführungsform umfasst die Ultraschallsensorvorrichtung ferner eine Steuereinheit, die dazu ausgebildet ist, den Ultraschallwandler zu steuern, das erste Ultraschallsignal und das zweite Ultraschallsignal zu empfangen, wobei das erste Ultraschallsignal und das zweite Ultraschallsignal abwechselnd empfangen werden. Nach dem Empfangen des ersten Ultraschallsignals kann das zweite Ultraschallsignal von dem Ultraschallwandler empfangen werden, und nach dem Empfangen des zweiten Ultraschallsignals kann das erste Ultraschallsignal von dem Ultraschallwandler empfangen werden. Das abwechselnde Empfangen des ersten Ultraschallsignals und des zweiten Ultraschallsignals kann derart erfolgen, dass zwischen dem ersten Ultraschallsignal und dem zweiten Ultraschallsignal kein weiteres Ultraschallsignal von dem Ultraschallwandler empfangen wird. Ebenso wenig wird zwischen dem zweiten Ultraschallsignal und dem ersten Ultra-schallsignal kein weiteres Ultraschallsignal von dem Ultraschallwandler empfangen.

Alternativ ist die Steuereinheit dazu ausgebildet, den Ultraschallwandler zu steuern, das erste Ultraschallsignal und das zweite Ultraschallsignal zu empfangen, wobei das erste Ultraschallsignal nach einem erstmaligen Empfangen des ersten Ultraschallsignals erst nach einer ganzzahligen Vielzahl von Zyklen nach dem zweiten Ultraschallsignal wieder empfangen wird, insbesondere nach 10 Zyklen.

Nach dem erstmaligen Empfangen des ersten Ultraschallsignals kann das zweite Ultraschallsignal von dem Ultraschallwandler empfangen werden, und nach dem Empfangen des zweiten Ultraschallsignals kann zumindest ein weiteres zweites Ultraschallsignal von dem Ultraschallwandler empfangen werden. Das Empfangen eines Ultraschallsignals kann als Zyklus bezeichnet werden, wobei ein Zyklus ein vollständiges Empfangen eines Empfangssignals umfasst. Somit würde die Laufzeitermittlung basierend auf dem ersten Ultraschallsignal nur gelegentlich erfolgen und die Laufzeitermittlung basierend auf dem zweiten Ultraschallsignal deutlich öfter, um eine hohe Abtastung einer Durchflussrate des Mediums zu erreichen.

Es ist auch möglich, dass zunächst eine ganzzahlige Vielzahl von zweiten Ultraschallsignalen von dem Ultraschallwandler empfangen werden, bevor erstmalig das erste Ultraschallsignal von dem Ultraschallwandler empfangen wird.

Die Steuereinheit kann insbesondere dazu ausgebildet sein, den Ultraschallwandler zwischen einem Sendebetrieb und einem Empfangsbetrieb umzuschalten. Die Steuereinheit kann mit der Auswerteeinheit verbunden sein, oder die Steuereinheit und Auswerteeinheit können zusammen eine Einheit bilden. Die Steuereinheit kann dazu ausgebildet sein, den ersten Ultraschallwandler und den zweiten Ultraschallwandler zu steuern, insbesondere so, dass der erste Ultraschallwandler als Empfänger und der zweite Ultraschallwandler als Sender betrieben werden. Wird der Ultraschallwandler als Sender betrieben, so kann die Steuereinheit den Ultraschallwandler veranlassen, Ultraschallsignale zu senden.

In einer Ausführungsform ist die Auswerteeinheit dazu ausgebildet, das erste Ultraschallsignal von einem Zeitbereich in ein erstes analytisches Signal in einen Frequenzbereich und das zweite Ultraschallsignal von dem Zeitbereich in ein zweites analytisches Signal in den Frequenzbereich zu transformieren. Das erste Ultra-schallsignal und das zweite Ultraschallsignal können mittels einer Fourier-Transformation, insbesondere einer Hilbert-Transformation in das erste analytische Signal und das zweite analytische Signal transformiert werden. Das Transformieren der Ultraschallsignale von dem Zeitbereich in den Frequenzbereich kann eine möglichst genaue Bestimmung der Laufzeit des ersten Ultraschallsignals und des zweiten Ultraschallsignals ermöglichen.

In einer Ausführungsform ist die Auswerteeinheit dazu ausgebildet, das erste analytische Signal und das zweite analytische Signal zu filtern, wobei eine erste Filterbreite für das Filtern des ersten analytischen Signals größer ist als eine zweite Filterbreite für das Filtern des zweiten analytischen Signals. Die Filterbreite kann einen Frequenzbereich angeben. Insbesondere kann die jeweilige Fensterbreite basierend auf einer Trägerfrequenz und einer Bandbreite für das erste Ultraschallsignal bzw. das zweite Ultraschallsignal bestimmt werden. Bei der Filterung können die fouriertransformierten Ultraschallsignale in einem Bereich des Fensters durch punktweise Multiplikation mit einer Fensterfunktion skaliert und außerhalb des Fensters zu Null gesetzt werden.

Durch eine größere Filterbreite für die Filterung des ersten Ultraschallsignals, d.h. einem größeren Frequenzbereich der für die Filterung des ersten Ultraschallsignals verwendet werden kann, kann ein Maximum der Hüllkurve des ersten Ultraschallsignals deutlicher ausgeprägt werden. Durch eine kleinere oder schmalere Filterbreite für die Filterung des zweiten Ultraschallsignals, d.h. einem kleineren Frequenzbereich der für die Filterung des zweiten Ultraschallsignals verwendet werden kann, können Störungen des Ultraschallsignals sehr gut weggefiltert werden. Insbesondere können durch die Filterung störende Rauschanteile und Artefakte die durch die Transformation von dem Zeitbereich in den Frequenzbereich entstehen können verringert oder eliminiert werden.

In einer Ausführungsform ist die Auswerteeinheit dazu ausgebildet, das erste gefilterte analytische Signal und das zweite gefilterte analytische Signal von dem Frequenzbereich in den Zeitbereich zu transformieren. Eine Rücktransformation von dem Frequenzbereich in den Zeitbereich kann durch eine inverse Fouriertransformation erfolgen. Das Bestimmen der Hüllkurve des ersten Ultraschallsignals kann basierend auf dem rücktransformierten und gefilterten ersten analytischen Signal erfolgen. Das Bestimmen des Phasenverlaufs des zweiten Ultraschallsignals kann basierend auf dem rücktransformierten und gefilterten zweiten analytischen Signal erfolgen.

In einer Ausführungsform ist die Auswerteeinheit dazu ausgebildet, ein Maximum der Hüllkurve des ersten Ultraschallsignals zu bestimmen, zumindest zwei Nulldurchgängen des Phasenverlaufs des zweiten Ultraschallsignals zu bestimmen, die erste Laufzeit basierend auf dem Maximum der Hüllkurve des ersten Ultraschallsignals zu bestimmen und die zweite Laufzeit basierend auf den zumindest zwei Nulldurchgängen des Phasenverlauf des zweiten Ultraschallsignals zu bestimmen. Das Maximum der Hüllkurve des ersten Ultraschallsignals kann durch das relativ kurze Sendesignal mit lediglich einer Signalperiode sehr genau bestimmt werden. Für eine Position des Maximums kann der Abtastpunkt des größten aufgezeichneten Signalwerts des ersten Ultraschallsignals verwendet werden. Ein Abstand der Position des Maximums der Hüllkurve auf einer x-Achse in einem Amplituden-Zeit-Diagramm des ersten Ultraschallsignals zu einem Startpunkt, an dem das Empfangen des ersten Ultraschallsignals beginnt, kann der ersten Laufzeit entsprechen. Ist der Startpunkt der Ursprung des Amplituden-Zeit-Diagramms, d.h. liegt der Startpunkt bei t=0 Sekunden, so entspricht die Position des Maximums der Hüllkurve auf der x-Achse in dem Amplituden-Zeit-Diagramm der ersten Laufzeit des ersten Ultraschallsignals.

Das längere, zweite Ultraschallsignal kann eine Vielzahl von Nulldurchgängen in dem Phasenverlauf umfassen. Die Anzahl der Nulldurchgänge kann abhängig von der Anzahl Signalperioden des zweiten Ultraschallsignals sein. Ein Nulldurchgang beschreibt hierbei einen Schnittpunkt des Phasenverlaufs mit der x-Achse des Amplituden-Zeit-Diagramms des zweiten Ultraschallsignals. Je mehr Signalperioden das zweite Ultraschallsignal umfasst, desto mehr Nulldurchgänge können in dem Phasenverlauf des zweiten Ultraschallsignals ermittelt und desto genauer kann die zweite Laufzeit basierend auf dem zweiten Ultraschallsignal bestimmt werden.

In einer Ausführungsform ist die Auswerteeinheit dazu ausgebildet, das Maximum der Hüllkurve des ersten Ultraschallsignals mittels einer Parabel zu bestimmen, wobei ein Scheitelpunkt der Parabel mit dem Maximum der Hüllkurve übereinstimmt.

Allgemein kann das Maximum der Hüllkurve des ersten Ultraschallsignals auch durch einen Funktionsfit erfolgen, wobei eine Funktion, insbesondere eine Polynomfunktion wie beispielsweise eine Parabel an den Kurvenverlauf des ersten Ultraschallsignals angepasst wird. Durch den Funktionsfit kann eine bessere Auflösung als die Samplingrate des ersten Ultraschallsignals erreicht werden und somit die erste Laufzeit genauer bestimmt werden.

In einer Ausführungsform ist die Auswerteeinheit dazu ausgebildet, die zweite Laufzeit des zweiten Ultraschallsignals basierend auf der ersten Laufzeit des ersten Ultraschallsignals zu korrigieren, wobei die Durchflussgeschwindigkeit des Mediums die korrigierte zweite Laufzeit ist. Insbesondere kann beim Auftreten eines Phasensprungs in dem zweiten Ultraschallsignal ein Fehler in der zweiten Laufzeit, der durch den Phasensprung entstanden ist, korrigiert werden. Auf Basis des ersten Ultraschallsignals kann hierzu eine Abschätzung der Laufzeit ermittelt werden die angibt, wie lange die Laufzeit des Ultraschallsignals ungefähr sein müsste. Die so ermittelte Abschätzung der Laufzeit kann zur Korrektur der zweiten Laufzeit verwendet werden.

Ein weiterer Aspekt der Erfindung betrifft ein Verfahren zur Bestimmung einer Durchflussgeschwindigkeit eines Mediums mittels einer Ultraschallsensorvorrichtung wie hierin beschrieben. Das Verfahren umfasst die folgenden Schritte: Empfangen eines ersten mit einem Medium übertragenen Ultraschallsignals zu einem ersten Zeitpunkt; Empfangen eines zweiten mit dem Medium übertragenen Ultraschallsignals zu einem zweiten Zeitpunkt; Bestimmen einer Hüllkurve des ersten Ultraschallsignals; Bestimmen eines Phasenverlaufs des zweiten Ultraschallsignals; Bestimmen einer ersten Laufzeit basierend auf der Hüllkurve des ersten Ultraschallsignals; Bestimmen einer zweiten Laufzeit basierend auf dem Phasenverlauf des zweiten Ultraschallsignals; und Bestimmen einer Durchflussgeschwindigkeit des Mediums basierend auf der ersten Laufzeit und der zweiten Laufzeit.

In einer Ausführungsform umfasst das erste Ultraschallsignal eine geringere Anzahl von Sendepulsen als das zweite Ultraschallsignal.

In einer Ausführungsform umfasst das erste Ultraschallsignal eine Signalperiode und das zweite Ultraschallsignal eine Vielzahl von Signalperioden.

In einer Ausführungsform ist eine erste Sendefrequenz des ersten Ultraschallsignals verschieden von einer zweiten Sendefrequenz des zweiten Ultraschallsignals.

In einer Ausführungsform werden das erste Ultraschallsignal und das zweite Ultra-schallsignal abwechselnd empfangen.

In einer Ausführungsform wird das erste Ultraschallsignal nach einem erstmaligen Empfangen des ersten Ultraschallsignals erst nach einer ganzzahligen Vielzahl von Zyklen nach dem zweiten Ultraschallsignal wieder empfangen, insbesondere nach 10 Zyklen.

Ein weiterer Aspekt der Erfindung betrifft ein Ultraschallsensorsystem. Das Ultraschallsensorsystem umfasst eine Vielzahl von Ultraschallsensorvorrichtungen wie hierin beschrieben und einen Kanal in dem das Medium strömt, wobei zumindest zwei Ultraschallwandler in einer Wandung des Kanals einander zugewandt angeordnet sind.

Nachfolgend wird die Erfindung rein beispielhaft unter Bezugnahme auf die Zeichnungen beschrieben. Es zeigen:

Figur 1    ein Ausführungsbeispiel einer erfindungsgemäßen Ultraschallsensorvorrichtung zum Bestimmen einer Durchflussgeschwindigkeit eines Mediums;

Figur 2    einen beispielhaften Signalverlauf eines ersten Sendesignals;

Figur 3    einen beispielhaften Signalverlauf eines zweiten Sendesignals;

Figur 4    einen beispielhaften Signalverlauf eines ersten Empfangssignals basierend auf dem ersten Sendesignal aus Figur 2;

Figur 5    einen beispielhaften Signalverlauf eines zweiten Empfangssignals basierend auf dem zweiten Sendesignal aus Figur 3; und

Figur 6    ein Flussdiagramm, welches ein Verfahren zur Bestimmung einer Durchflussgeschwindigkeit eines Mediums mittels der erfindungsgemäßen Ultraschallsensorvorrichtung beschreibt.

Die Erfindung betrifft eine Ultraschallsensorvorrichtung mit der mittels zumindest einer Laufzeitmessung eines Ultraschallsignals die Durchflussgeschwindigkeit eines fließenden Mediums bestimmt werden kann. Insbesondere kann mit der hierin beschriebenen Ultraschallsensorvorrichtung die Laufzeitmessung, also eine Time-of-Flight (ToF)-Bestimmung, verbessert werden.

Zur Bestimmung einer Durchflussgeschwindigkeit eines Mediums, beispielsweise eines Fluids durch eine Rohrleitung kann ein relativ kurzes Ultraschallsignal als Sendepuls verwendet werden, um ein ausgeprägtes Maximum einer Einhüllenden des entsprechenden Empfangssignals zu ermöglichen. Aufgrund des kurzen Sendepulses ist der Signalpegel des Empfangssignals gering und es kann auch nur eine begrenzte Anzahl an Nulldurchgängen der Phase des Empfangssignals zur Bestimmung der Laufzeit des Ultraschallsignals und damit zur Bestimmung der Durchflussgeschwindigkeit des Mediums ausgewertet werden. Des Weiteren können Einschränkungen bei der digitalen Filterung des kurzen Ultraschallsignals bestehen.

Wird hingegen ein längeres Ultraschallsignal zur Bestimmung der Durchflussgeschwindigkeit des Mediums verwendet, so kann eine hohe Anzahl von Nulldurchgängen der Phase des Empfangssignals erreicht werden. Jedoch kann die Ermittlung eines Maximums der Einhüllenden bei einem längeren Sendesignal schwieriger sein.

Ein Problem bei der Laufzeitmessung eines Ultraschallsignals kann folglich darin liegen, dass gewisse Eigenschaften, wie beispielsweise eine hohe Anzahl an Nulldurchgängen des Phasenverlaufs, bei einem längeren Ultraschallsignal besser sind als andere Eigenschaften wie beispielsweise ein ausgeprägtes Maximum der Einhüllenden, bei einem kürzeren Ultraschallsignal. Die Begriffe "länger" und "kürzer" beziehen sich hierbei auf eine Sende- und/oder Empfangsdauer des Ultraschallsignals. Das längere Ultraschallsignal weist demnach eine längere Sende-und/oder Empfangsdauer auf als das kürzere Ultraschallsignal.

Das Problem kann erfindungsgemäß dadurch gelöst werden, dass beispielsweise zwei verschiedene Ultraschallsignale gesendet und empfangen werden. Zuerst kann ein kurzes Ultraschallsignal gesendet werden, welches auf einer Empfangsseite der Ultraschallsensorvorrichtung nur zur Bestimmung einer ersten, groben Laufzeit des Ultraschallsignals dienen kann. Anschließend kann ein zweites, längeres Ultraschallsignal gesendet werden, welches auf der Empfangsseite der Ultraschallsensorvorrichtung zur Bestimmung einer zweiten, feineren Laufzeit des Ultraschallsignals dienen kann. Basierend auf der ersten Laufzeit und der zweiten Laufzeit kann mittels der Ultraschallsensorvorrichtung die Durchflussgeschwindigkeit des Mediums bestimmt werden.

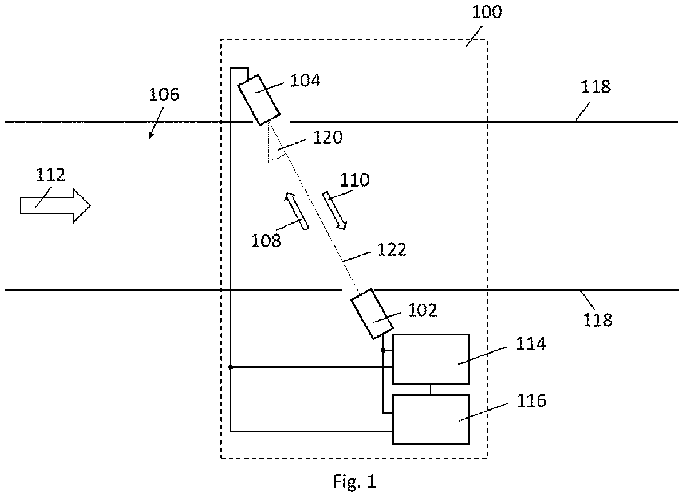

Figur 1 zeigt ein Ausführungsbeispiel einer erfindungsgemäßen Ultraschallsensorvorrichtung 100 zum Bestimmen einer Durchflussgeschwindigkeit eines Mediums 106. Die Ultraschallsensorvorrichtung 100 kann zumindest einen Ultraschallwandler 102, insbesondere zwei Ultraschallwandler 102, 104 umfassen. Zur Unterscheidung der beiden Ultraschallwandler 102, 104 kann der eine Ultraschallwandler 102 als erster Ultraschallwandler 102 bezeichnet werden und der andere Ultraschallwandler 104 als zweiter Ultraschallwandler 104. Es versteht sich, dass Eigenschaften und Funktionen die für den ersten Ultraschallwandler 102 beschrieben werden auch für den zweiten Ultraschallwandler 104 zutreffen. Die beiden Ultraschallwandler 102, 104 können folglich in Aufbau und Funktionsweise identisch sein. Aus Effizienzgründen werden daher im Wesentlichen lediglich Eigenschaften und Funktionsweisen eines, z.B. des ersten Ultraschallwandlers 102 beschrieben.

Der Ultraschallwandler 102 kann dazu ausgebildet sein, ein erstes in bzw. mit einem Medium 106 übertragenes Ultraschallsignal 108 zu einem ersten Zeitpunkt und ein zweites in bzw. mit dem Medium 106 übertragenes Ultraschallsignal 110 zu einem zweiten Zeitpunkt zu empfangen. Der Ultraschallwandler 102 kann ferner dazu ausgebildet sein, ein Ultraschallsignal 108, 110 zu verschiedenen Zeitpunkten auszusenden, sodass das ausgesendete Ultraschallsignal 108, 110 mit dem Medium 106 übertragen, z.B. durch das Medium 106 transportiert, werden kann. In Figur 1 ist insbesondere der erste Ultraschallwandler 102 dazu ausgebildet, das erste Ultraschallsignal 108 zu dem ersten Zeitpunkt und der zweite Ultraschallwandler 104 ausgebildet, das zweite Ultraschallsignal 110 zu dem zweiten Zeitpunkt auszusenden. Das erste Ultraschallsignal 108 kann insbesondere entgegen einer Strömungsrichtung 112 des Mediums 106 und das zweite Ultraschallsignal 110 mit der Strömungsrichtung 112 des Mediums ausgesendet werden. Die Ultraschallwandler 102, 104 können sowohl als Sender, als auch als Empfänger betrieben werden.

Der erste Ultraschallwandler 102 und der zweite Ultraschallwandler 104 können einander zugewandt angeordnet sein. Insbesondere können die beiden Ultraschallwandler 102, 104 derart angeordnet sein, dass der erste Ultraschallwandler 102 die von dem zweiten Ultraschallwandler 104 ausgesendeten Ultraschallsignale 108, 110 empfangen kann, und umgekehrt. Der erste Ultraschallwandler 102 und der zweite Ultraschallwandler 104 sind in einer Wandung eines Kanals 118 in dem das Medium 106 in Strömungsrichtung 112 strömt einander zugewandt angeordnet. Insbesondere sind der erste Ultraschallwandler 102 und der zweite Ultraschallwandler 104 schräg, d.h. in einem Winkel 120 kleiner 90°, und somit auch schräg zu der Strömungsrichtung 112 des Mediums 106 an gegenüberliegenden Wandungen des Kanals 118 in einem Abstand 122 zueinander angeordnet. Auf Basis einer Laufzeitdifferenz des ersten Ultraschallsignals 108 entgegen der Strömung und des zweiten Ultraschallsignals 110 mit der Strömung kann die Strömungsgeschwindigkeit des Mediums 106 bestimmt werden. Die Ultraschallsignale 108, 110 werden dabei in Strömungsrichtung 112 beschleunigt und entgegen der Strömungsrichtung 112 abgebremst. Die resultierende Laufzeitdifferenz kann mittels geometrischen Größen zu einer mittleren Durchflussgeschwindigkeit des Mediums 106 berechnet werden. Ist eine Querschnittfläche des Kanals 118 bekannt, so kann aus der ermittelten Durchflussgeschwindigkeit auch ein Volumenstrom des Mediums 106 berechnet werden. Das Medium 106 kann insbesondere ein Fluid sein, insbesondere ein Gas oder eine Flüssigkeit.

Die Ultraschallsensorvorrichtung 100 kann ferner eine Auswerteeinheit 114 umfassen. Die Auswerteeinheit 114 kann dazu ausgebildet sein, die von dem ersten Ultraschallwandler 102 und/oder dem zweiten Ultraschallwandler 104 empfangenen Ultraschallsignale 108, 110 auszuwerten. Die Funktionsweise der Auswerteeinheit 114 wird im Detail weiter unten beschrieben.

Die Ultraschallsensorvorrichtung 100 kann auch eine Steuereinheit 116 umfassen. Die Steuereinheit 116 kann mit der Auswerteeinheit 114 elektrisch in Verbindung stehen und dazu ausgebildet sein, mit der Auswerteeinheit 114 zu kommunizieren. Die Steuereinheit 116 und die Auswerteeinheit 114 können auch als eine gemeinsame Einheit ausgebildet sein. Die Steuereinheit 116 kann dazu ausgebildet sein, den ersten Ultraschallwandler 102 derart zu steuern, dass der erste Ultraschallwandler 102 das erste Ultraschallsignal 108 und das zweite Ultraschallsignal 110 empfangen kann. Insbesondere kann die Steuereinheit 116 dazu ausgebildet sein, den ersten Ultraschallwandler 102 als Empfänger von Ultraschallsignalen 108, 110 zu betreiben.

Die Steuereinheit 116 kann auch dazu ausgebildet sein, den ersten Ultraschallwandler 102 derart zu steuern, dass das erste Ultraschallsignal 108 und das zweite Ultraschallsignal 110 von dem ersten Ultraschallwandler 102 abwechselnd empfangen werden können. Nach einem Empfangen des ersten Ultraschallsignals 108 erfolgt somit ein Empfangen des zweiten Ultraschallsignals 110. Zwischen dem ersten Ultraschallsignal 108 und dem zweiten Ultraschallsignal 110 wird in diesem Ausführungsbeispiel kein weiteres Ultraschallsignal 108, 110 von dem ersten Ultraschallwandler 102 empfangen.

Alternativ hierzu kann die Steuereinheit 116 auch dazu ausgebildet sein, den ersten Ultraschallwandler 102 derart zu steuern, dass das erste Ultraschallsignal 108 nach einem erstmaligen Empfangen des ersten Ultraschallsignals 108 erst nach einer ganzzahligen Vielzahl von Zyklen nach dem zweiten Ultraschallsignal 110 wieder empfangen wird. Nach einem Empfangen des ersten Ultraschallsignals 108 kann somit ein Empfangen des zweiten Ultraschallsignals 110 erfolgen, wobei nach dem Empfangen des zweiten Ultraschallsignals 110 ein weiteres Empfangen eines weiteren, zweiten Ultraschallsignals 110 oder ein Empfangen einer Vielzahl von weiteren, zweiten Ultraschallsignalen 110 zu verschiedenen Zeitpunkten erfolgen kann, bevor wieder ein erstes Ultraschallsignal 108 von dem ersten Ultraschallwandler 102 empfangen wird. Insbesondere kann die Steuereinheit 116 dazu ausgebildet sein, das erste Ultraschallsignal 108 erst nach 50, 40, 30, 20, insbesondere 10 Zyklen eines letztmaligen Empfangens des ersten Ultraschallsignals 108 wieder zu empfangen.

Die Steuereinheit 116 kann dazu ausgebildet sein, den ersten Ultraschallwandler 102 in gleicher Weise für das Aussenden von Ultraschallsignalen 108, 110 zu steuern. Entsprechend kann die Steuereinheit 116 dazu ausgebildet sein, den ersten Ultraschallwandler 102 zu steuern, das erste Ultraschallsignal 108 und das zweite Ultraschallsignal 110 abwechselnd auszusenden, oder das erste Ultra-schallsignal 108 nach einem erstmaligen Aussenden des ersten Ultraschallsignals 108 erst nach einer ganzzahligen Vielzahl von Zyklen nach dem zweiten Ultra-schallsignal 110 wieder auszusenden. Folglich kann die Steuereinheit 116 auch dazu ausgebildet sein, den ersten Ultraschallwandler 102 als Sender von Ultraschallsignalen 108, 110 zu betreiben.

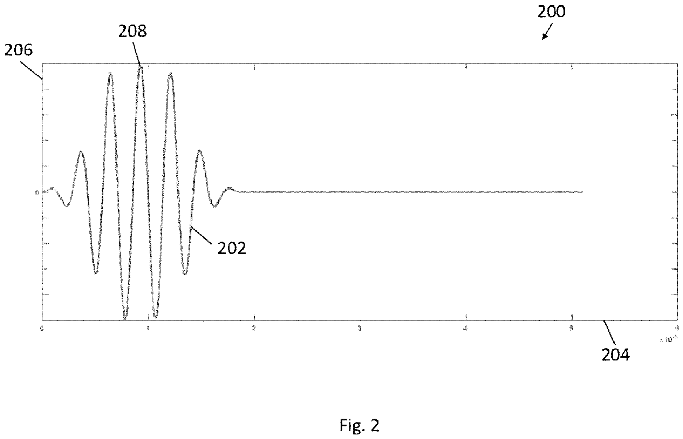

Nachfolgend wird die erfindungsgemäße Bestimmung einer Durchflussgeschwindigkeit des Mediums 106 mittels der Auswerteeinheit 114 der Ultraschallsensorvorrichtung 100 anhand von beispielhaften Signalverläufen 200, 300, 400, 500 in den Figuren 2 bis 5 erläutert.

Figur 2 zeigt einen beispielhaften Signalverlauf 200 eines ersten Sendesignals 202 gemäß eines Ausführungsbeispiels. Insbesondere zeigt Figur 2 einen zeitabhängigen Amplitudenverlauf in einem Amplituden-Zeit-Diagramm des ersten Sendesignals 202, wobei auf der x-Achse 204 oder Abszisse des Amplituden-Zeit-Diagramms eine Zeit und auf der y-Achse 206 oder Ordinate des Amplituden-Zeit-Diagramms eine Amplitude des ersten Sendesignals 202 aufgetragen ist. Das erste Sendesignal 202 kann von dem zweiten Ultraschallwandler 104 ausgesendet werden. Das erste Sendesignal 202 weist eine Dauer von ca. $2\times10^{-6}$ Sekunden auf, wobei das erste Sendesignal 202 beginnend bei einem Zeitpunkt t=0 Sekunden ausgesendet wird und einen ansteigenden Amplitudenverlauf bis zu einem (positiven) Maximum 208 der Amplitude bei einem Zeitpunkt bei ca.t=$0,9\times10^{-6}$ Sekunden aufweist. Nach einem Erreichen des Maximums 208 weist das erste Sendesignal 202 einen abfallenden Amplitudenverlauf bis zum Signaldauerende auf. Bei dem ersten Sendesignal 202 kann es sich, wie in Figur 2 dargestellt, beispielhaft um ein Wellenpaket handeln, bei dem einer Trägerfrequenz (nicht dargestellt) ein pulsartiger Verlauf aufmoduliert ist.

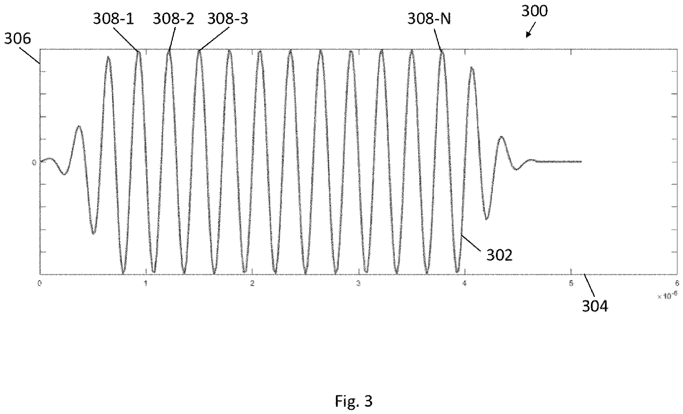

Das erste Sendesignal 202 kann als das erste Ultraschallsignal 108 von dem ersten Ultraschallwandler 102 empfangen werden, nachdem das erste Sendesignal 202 von dem zweiten Ultraschallwandler 104 ausgesendet und mit dem Medium 106 übertragen wurde. Das erste Sendesignal 202 kann im Vergleich zu dem in Figur 3 dargestelltem zweiten Sendesignal 302 ein kurzes Ultraschallsignal sein.

Figur 3 zeigt einen beispielhaften Signalverlauf 300 eines zweiten Sendesignals 302 gemäß eines Ausführungsbeispiels. Figur 3 zeigt einen zeitabhängigen Amplitudenverlauf des zweiten Sendesignals 302 in einem Amplituden-Zeit- Diagramm, wobei auf der x-Achse 304 oder Abszisse des Amplituden-Zeit-Diagramms eine Zeit und auf der y-Achse 306 oder Ordinate des Amplituden-Zeit-Diagramm einen Amplitude des zweiten Sendesignals 302 aufgetragen ist. Das zweite Sendesignal 302 kann von dem zweiten Ultraschallwandler 104 ausgesendet werden. Das zweite Sendesignal 302 weist eine Dauer von ca. $4,7\times10^{-6}$ Sekunden auf, wobei das zweite Sendesignal 302 beginnend bei einem Zeitpunkt t=0 Sekunden ausgesendet wird. Es versteht sich, dass das zweite Sendesignal 302 auch beginnend bei einem späteren Zeitpunkt t>0 Sekunden ausgesendet werden kann, insbesondere zu einem Zeitpunkt nach dem Aussenden des ersten Sendesignals 202. Das zweite Sendesignal 302 weist einen ansteigenden Amplitudenverlauf bis zu einem ersten (positiven) Maximum 308-1 der Amplitude bei ca. t=$0,9\times10^{-6}$ Sekunden auf. Nach einem Erreichen des ersten Maximums 308-1 weist das zweite Sendesignal 302 eine Vielzahl weiterer Amplitudenmaxima 308-2, 308-3, ... 308-N in einem Abstand von jeweils einer Periodendauer des zweiten Sendesignals 302 auf. Nach einem Erreichen eines letzten Maximums 308-N weist das zweite Sendesignal 302 einen abfallenden Amplitudenverlauf bis zum Signaldauerende auf. Bei dem zweiten Sendesignal 302 kann es sich wie in Figur 3 dargestellt beispielhaft um ein Wellenpaket handeln, bei dem einer Trägerfrequenz (nicht dargestellt) ein pulsartiger Verlauf aufmoduliert ist.

Das zweite Sendesignal 302 kann als zweites Ultraschallsignal 110 von dem ersten Ultraschallwandler 102 empfangen werden, nachdem das zweite Sendesignal 302 von dem zweiten Ultraschallwandler 104 ausgesendet und mit dem Medium 106 übertragen wurde. Dementsprechend kann das zweite Sendesignal 302 anschließend an das erste Sendesignal 202 von dem zweiten Ultraschallwandler 104 gesendet werden.

Das zweite Sendesignal 302 kann im Vergleich zu dem ersten Sendesignal 202 einige Unterschiede aufweisen. Beispielsweise ist die Sendedauer des zweiten Sendesignals 302 deutlich länger als die Sendedauer des ersten Sendesignals 202 aus Figur 2. Das zweite Sendesignal 302 kann demnach im Vergleich zu dem in Figur 2 dargestelltem ersten Sendesignal 202 ein langes Ultraschallsignal sein.

Das zweite Sendesignal 302 weist zudem mehrere Sendeperioden mit mehreren Amplitudenmaxima auf als erstes Sendesignal 202. Während das erste Sendesignal 202 lediglich ein Amplitudenmaxima 208 aufweist, umfasst das zweite Sendesignal 302 eine Vielzahl von Amplitudenmaxima 308-2, 308-3, ... 308-N.

Die beiden unterschiedlichen Sendesignale 202, 302 können sich alternativ oder zusätzlich auch in ihrer Sendefrequenz unterscheiden. So kann das erste Sendesignal 202 eine andere Sendefrequenz aufweisen als das zweite Sendesignal 302.

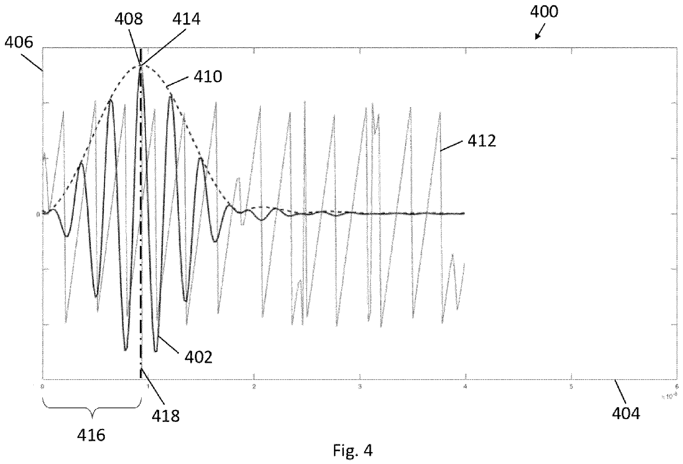

Figur 4 zeigt einen beispielhaften Signalverlauf 400 eines ersten Empfangssignals 402 basierend auf dem ersten Sendesignal 202 aus Figur 2. Entsprechend der Figur 2 zeigt die Figur 4 einen zeitabhängigen Amplitudenverlauf in einem Amplituden-Zeit-Diagramms. Auf der x-Achse 404 des Amplituden-Zeit-Diagramms ist eine Zeit und auf der y-Achse 406 des Amplituden-Zeit-Diagramms ist einen Amplitude des ersten Empfangssignals 402 aufgetragen. Das erste Empfangssignal 402 kann von dem ersten Ultraschallwandler 102 empfangen werden. Das erste Empfangssignal 402 weist eine Dauer von ca. $3 \times 10^{-6}$ Sekunden auf bis es nahezu vollständig abgeklungen ist. Das erste Empfangssignal 402 wird beginnend bei einem Zeitpunkt t=0 Sekunden empfangen und weist einen ansteigenden Amplitudenverlauf bis zu einem Maximum 408 der Amplitude bei ca. $t=0,9 \times 10^{-6}$ Sekunden auf. Nach einem Erreichen des Maximums 408 weist das erste Empfangssignal 402 einen abfallenden Amplitudenverlauf bis zum Signaldauerende auf.

Bei dem ersten Empfangssignal 402 kann es sich entsprechend dem ersten Sendesignal 202 und wie in Figur 4 dargestellt beispielhaft um ein Wellenpaket handeln.

Das erste Empfangssignal 402 kann dem ersten Ultraschallsignal 108 entsprechen. Das erste Empfangssignal 402 kann von der Auswerteeinheit 114 aufgezeichnet und digitalisiert werden. Die Auswerteeinheit 114 kann dazu ausgebildet sein, eine Hüllkurve 410 des ersten Empfangssignals 402 bzw. des ersten Ultraschallsignals 108 zu bestimmen. Die Auswerteeinheit 114 kann ferner dazu ausgebildet sein, einen Phasenverlauf 412 des ersten Ultraschallsignals 108 zu bestimmen.

Um die Laufzeit (ToF) des ersten Empfangssignals 402 möglichst genau zu bestimmen, kann das erste Empfangssignal 402 von dem in Figur 4 dargestellten Zeitbereich in einen Frequenzbereich transformiert werden. Insbesondere kann zur Bestimmung der Hüllkurve 410 oder des Phasenverlaufs 412 zunächst das erste Empfangssignal 402 bzw. das erste Ultraschallsignal 108 mittels der Auswerteeinheit 114 von dem Zeitbereich in ein erstes analytisches Signal in den Frequenzbereich transformiert werden. Das erste analytische Signal in dem Frequenzbereich kann mittels eine Fouriertransformation, beispielsweise einer FFT (Fast Fourier Transformation), des ersten Empfangssignals 402 bzw. des ersten Ultraschallsignals 108 bestimmt werden. Insbesondere kann durch eine Anwendung einer Hilbert Transformation das erste analytische Signal generiert werden.

In dem Frequenzbereich kann das erste Empfangssignal 402 mit Hilfe einer Fensterung gefiltert werden. Insbesondere kann die Auswerteeinheit 114 dazu ausgebildet sein, das erste analytische Signal in dem Frequenzbereich zu filtern. Zur Fensterung kann ein Tukey-Fenster verwendet werden, alternativ kann ein Kosinus-, ein FlatTop- oder ein ähnliches Fenster verwendet werden. Da die Trägerfrequenz und eine Bandbreite für das erste Ultraschallsignal 108 bzw. das erste Empfangssignal 402 bekannt sind, kann für die Fensterung der Frequenzbereich bzw. eine Fensterbreite der Fensterung in einer Umgebung der Trägerfrequenz bestimmt werden. Das erste analytische Signal kann für die Filterung innerhalb eines durch den bestimmten Frequenzbereich definierten Fensters punktweise mit einer Fensterfunktion multipliziert werden, wobei das erste analytische Signal innerhalb des Fensters mit einer endlichen Fensterbreite skaliert und außerhalb des Fensters zu Null gesetzt wird. Bei diesem kurzen ersten Empfangssignal 402 kann die Fensterung im Frequenzbereich breiter eingestellt werden, d.h. ein größerer Frequenzbereich für die Filterung ausgewählt werden, damit das Maximum 408 der Hüllkurve 410 deutlicher ausgeprägt wird.

Das erste analytische Signal kann anschließend an die Filterung mittels der Auswerteeinheit 114 wieder zurück in den Zeitbereich transformiert werden. Die Rücktransformation kann mit Hilfe einer inversen Fouriertransformation, insbesondere einer IFFT, erfolgen. Die Auswerteeinheit 114 ist somit konfiguriert, das gefilterte, erste analytische Signal von dem Frequenzbereich in den Zeitbereich zu transformieren.

Die Hüllkurve 410 kann mittels der Auswerteeinheit 114 basierend auf einer Betragsbildung des rücktransformierten ersten analytischen Signals erfolgen, indem mittels eines Funktionsfits eine Einhüllende der positiven Amplitudenspitzen gebildet wird. Beispielsweise kann eine Parabel in die Einhüllende gefittet oder eingepasst werden.

Zum anderen kann eine Phase des ersten Empfangssignals 402 mittels der Auswerteinheit 114 berechnet werden. Dies ergibt den Phasenverlauf 412 des ersten Empfangssignals 402 bzw. des ersten Ultraschallsignals 108. Mit einem Zeitpunkt eines Nulldurchgangs 418 des Phasenverlaufs 412 durch die x-Achse 404 des Amplituden-Zeit-Diagramms kann eine Laufzeit des ersten Empfangssignals 402 bestimmt werden. Jedoch gibt es im Abstand der Periodendauer des ersten Empfangssignals 402 mehrere Nulldurchgänge der Phase. Da diese Nulldurchgänge bei einem größeren Messbereich des Ultraschallwandlers 102 nicht eindeutig sein können, muss sichergestellt werden, dass immer der gleiche Nulldurchgang der Phase zur Laufzeitmessung verwendet wird. Dazu kann ein Maximum 414 der Hüllkurve 410 des ersten Empfangssignals 402 mit Hilfe der Auswerteeinheit 114 bestimmt werden. Der Scheitelpunkt der in die Einhüllende gefitteten Parabel ist das Maximum 414 der Hüllkurve 410 des ersten Empfangssignals 402 bzw. des ersten Ultraschallsignals 108. Das Maximum 414 der Hüllkurve 410 kann mit dem Maximum 408 der Amplitude des ersten Empfangssignals 402 übereinstimmen.

Die Auswerteeinheit 114 kann insbesondere dafür ausgebildet sein, eine erste Laufzeit 416 basierend auf dem Maximum 414 der Hüllkurve 410 des ersten Empfangssignals 402 bzw. des ersten Ultraschallsignals 108 zu bestimmen. Um basierend auf dem Maximum 414 der Hüllkurve 410 die erste Laufzeit 416 sinnvoll bestimmen zu können, sollte das erste Empfangssignal 402 möglichst kurz sein und schnell abschwingen. Ebenfalls sollte auch die Filterung im Frequenzbereich nicht beliebig schmal sein da sonst die Hüllkurve 410 sehr flach ausgebildet sein kann.

Ein Abstand auf der x-Achse 404 des Amplituden-Zeit-Diagramms zwischen einer Position des Maximums 414 der Hüllkurve 410 auf der x-Achse 404 gegenüber einem Nullpunkt, beispielsweise dem Sendezeitpunkt bei t=0 Sekunden, kann der ersten Laufzeit 416 entsprechen. Somit kann mit Hilfe des Maximums 414 der Hüllkurve 410 ein entsprechender Nulldurchgang 418 ausgewählt werden und eine grobe Laufzeit basierend auf dem ersten Empfangssignal 402 bestimmt werden.

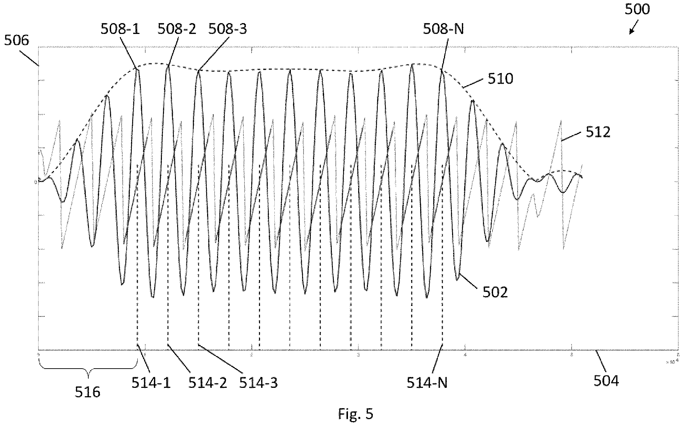

Figur 5 zeigt einen beispielhaften Signalverlauf 500 eines zweiten Empfangssignals 502 basierend auf dem zweiten Sendesignal 302 aus Figur 3. Entsprechend der Figur 3 zeigt die Figur 5 einen zeitabhängigen Amplitudenverlauf in einem Amplituden-Zeit-Diagramm. Auf der x-Achse 504 des Amplituden-Zeit-Diagramms ist eine Zeit und auf der y-Achse 506 des Amplituden-Zeit-Diagramms ist einen Amplitude des zweiten Empfangssignals 502 aufgetragen. Das zweite Empfangssignal 502 kann von dem ersten Ultraschallwandler 102 empfangen werden. Insbesondere kann das zweite Empfangssignal 502 anschließend an das erste Empfangssignal 402 von dem ersten Ultraschallwandler 102 empfangen werden. Das zweite Empfangssignal 502 weist eine Dauer von ca. $5 \times 10^{-6}$ Sekunden auf bis es nahezu vollständig abgeklungen ist. Das zweite Empfangssignal 502 wird beginnend bei einem Zeitpunkt t=0 Sekunden empfangen und weist einen ansteigenden Amplitudenverlauf bis zu einem ersten (positiven) Maximum 508-1 der Amplitude bei ca. $t=0,9 \times 10^{-6}$ Sekunden auf. Nach einem Erreichen des ersten Maximums 508-1 weist das zweite Empfangssignal 502 eine Vielzahl weiterer Amplitudenmaxima 508-2, 508-3, ... 508-N auf. Nach einem Erreichen eines letzten Maximums 508-N weist das zweite Empfangssignal 502 einen abfallenden Amplitudenverlauf bis zum Signaldauerende auf.

Bei dem zweiten Empfangssignal 502 kann es sich entsprechend dem zweiten Sendesignal 302 und wie in Figur 5 dargestellt beispielhaft um ein Wellenpaket handeln. Da das zweite Sendesignal 302 ein längeres Ultraschallsignal als das erste Sendesignal 202 ist, wobei bei dem zweite Sendesignal 302 beliebig viele Signalperioden gesendet werden können, kann sich durch das längere Anregen sendeseitig ein größerer Signalpegel auf der Empfangsseite ergeben. Das zweite Empfangssignal 502 weist eine längere Empfangsdauer auf als das erste Empfangssignal 402, das zweite Empfangssignal 502 ist dementsprechend länger als das erste Empfangssignal 402.

Das zweite Empfangssignal 502 kann dem zweiten Ultraschallsignal 110 entsprechen. Das zweite Ultraschallsignal 110 kann von der Auswerteeinheit 114 aufgezeichnet und digitalisiert werden. Die Auswerteeinheit 114 kann dazu ausgebildet sein, eine Hüllkurve 510 des zweiten Empfangssignals 502 bzw. des zweiten Ultraschallsignals 110 zu bestimmen. Die Auswerteeinheit 114 kann ferner dazu ausgebildet sein, einen Phasenverlauf 512 des zweiten Ultraschallsignals 110 zu bestimmen. Zur Bestimmung der Hüllkurve 510 oder des Phasenverlaufs 512 wird auf die entsprechende Beschreibung des ersten Empfangssignals 402 verwiesen, d.h. die Hüllkurve 510 oder der Phasenverlauf 512 kann genauso bestimmt werden wie dies für das erste Empfangssignal 402 beschrieben wurde.

Die Auswerteeinheit 114 kann dazu ausgebildet sein, das mittels Transformation des zweiten Empfangssignals 502 in den Frequenzbereich ermittelte zweite analytische Signal zu filtern. Das Filtern des zweiten analytischen Signals in dem Frequenzbereich kann entsprechend der Filterung des ersten analytischen Signals mittels einer Fensterung, wie oben beschrieben, erfolgen. Auch die Trägerfrequenz und eine Bandbreite für das zweite Ultraschallsignal 110 bzw. das zweite Empfangssignal 502 sind bekannt. Somit kann für die Fensterung des zweiten Ultraschallsignals 110 der Frequenzbereich bzw. eine Fensterbreite der Fensterung in einer Umgebung der Trägerfrequenz des zweiten Ultraschallsignals 110 bestimmt werden. Die Fensterung im Frequenzbereich kann für das zweite Empfangssignal 502 sehr schmal eingestellt werden, so dass nahezu nur noch die eigentliche Sendefrequenz im zweiten Empfangssignal 502 vorhanden ist. Dies kann bedeuten, dass ein kleiner Frequenzbereich für die Filterung des zweiten Empfangssignals 502 ausgewählt wird, insbesondere ein kleinerer Frequenzbereich als für die Filterung des ersten Empfangssignals 502. Dies kann vorteilhaft sein, um Störungen des zweiten Empfangssignals 502 durch die Filterung effektiv zu beseitigen.

Das zweite analytische Signal kann für die Filterung innerhalb eines durch den bestimmten Frequenzbereich definierten Fensters punktweise mit einer Fensterfunktion multipliziert werden, wobei das zweite analytische Signal innerhalb des Fensters mit einer endlichen Fensterbreite skaliert und außerhalb des Fensters zu Null gesetzt wird.

Basierend auf dem zweiten analytischen Signal kann die Auswerteeinheit 114 konfiguriert sein, den Phasenverlauf 512 des zweiten Empfangssignals 502 bzw. des zweiten Ultraschallsignals 110 zu bestimmen. Da das zweite Sendesignal 302 ein längeres Ultraschallsignal als das erste Sendesignal 202 ist und dementsprechend das zweite Empfangssignal 502 ein längeres Signal mit einer Vielzahl von Signalperioden ist, kann im Phasenverlauf 512 des zweiten Empfangssignals 502 eine Vielzahl von Nulldurchgängen 514-1, 514-2, 514-3, ... 514-N durch die x-Achse 504 des Amplituden-Zeit-Diagramms mittels der Auswerteeinheit 114 ermittelt werden. Diese Nulldurchgänge 514-1, 514-2, 514-3, ... 514-N können durch Verschiebung um entsprechende Vielfache der Periodendauer der Sendefrequenz rechnerisch aufeinandergelegt und dann gemittelt werden:

$$T_{PhaseMittel} = \frac{1}{n} * \sum_{k=0}^{n-1} T_{Phase(k)} - k * \frac{1}{Sendefrequenz},$$

wobei $T_{Phase}$ einen Zeitpunkt des Nulldurchgangs der Phase und $n$ eine Anzahl der ausgewerteten Nulldurchgänge beschreiben.

Die Genauigkeit der Verschiebung ist nicht relevant, jedoch muss die Verschiebung bei jeder Messung gleich sein. Ein Offsetfehler der dadurch bei jeder Messung entsteht ist dann immer gleich. Der Offsetfehler kann durch einen Abgleich der Laufzeit eliminiert werden. Bei dem Abgleich können verschiedene Durchflussraten in einem Endtester angefahren werden. Die angefahren Durchflussraten können als Stützstellen dienen zu denen jeweils ein Korrekturwert der Laufzeit (ToF) bestimmt und in der Ultraschallsensorvorrichtung 100 gespeichert werden kann. Hierzu kann die Ultraschallsensorvorrichtung 100 einen Speicher umfassen. Mit den Korrekturwerten kann die ermittelte erste Laufzeit 416 oder zweite Laufzeit 516 auf eine theoretisch korrekte Laufzeit für diesen Durchflusswert korrigiert werden. Zwischen den Stützstellen können die Korrekturwerte interpoliert werden, beispielsweise mittels einer lineare Interpolation zwischen den Stützstellen. Für die erste Laufzeit 416 und die zweite Laufzeit 516 kann so ein Korrekturwert gespeichert werden. Der jeweilige Korrekturwert kann zur ermittelten ersten Laufzeit 416 bzw. zur ermittelten zweiten Laufzeit 516 addiert werden, umso eine korrigierte Laufzeit zu erhalten.

Die Auswerteeinheit 114 kann dazu ausgebildet sein, eine zweite Laufzeit 516 basierend auf dem Phasenverlauf 512 des zweiten Ultraschallsignals 110 zu bestimmen. Die zweite Laufzeit 516 kann basierend auf zumindest zwei Nulldurchgängen 514-1, 514-2, 514-3, ... 514-N des Phasenverlauf 512 des zweiten Empfangssignals 502 bzw. des zweiten Ultraschallsignals 110 bestimmt werden. Insbesondere kann die Auswerteeinheit 114 dafür konfiguriert sein, die zweite Laufzeit 516 basierend auf den verschobenen und gemittelten Nulldurchgängen 514-1, 514-2, 514-3, ... 514-N des Phasenverlauf 512 des zweiten Empfangssignals 502 zu bestimmen. Die zweite Laufzeit 516 kann einem Abstand auf der x-Achse 504 zwischen einer Position der verschobenen und gemittelten Nulldurchgänge des Phasenverlauf 512 auf der x-Achse 504 des Amplituden-Zeit-Diagramms gegenüber einem Nullpunkt, beispielsweise dem Sendezeitpunkt bei t=0 Sekunden entsprechen. Durch die Auswertung mehrerer Nulldurchgänge 514-1, 514-2, 514-3, ... 514-N des Phasenverlauf 512 kann die Laufzeit des Ultraschallsignals noch genauer bestimmt werden.

Schließlich ist die Auswerteeinheit 114 dafür ausgebildet, eine Durchflussgeschwindigkeit des Mediums 106 basierend auf der ersten Laufzeit 416 und der zweiten Laufzeit 516 zu bestimmen. Insbesondere kann die Durchflussgeschwindigkeit des Mediums 106 basierend auf einer Laufzeitdifferenz zwischen der ersten Laufzeit 416 und der zweiten Laufzeit 516 bestimmt werden. Die Laufzeitdifferenz kann gemäß folgender Formel ermittelt werden:

$$v = L/(2cos\alpha) * (1/t_1 - 1/t_2)$$

wobei L den Abstand 122 und $\alpha$ den Winkel 120 (siehe Figur 1) zwischen dem ersten Ultraschallwandler 102 und dem zweiten Ultraschallwandler 104 angibt, $t_1$ der ersten Laufzeit 416 basierend auf dem ersten Ultraschallsignal 108 und $t_2$ der zweiten Laufzeit 516 basierend auf dem zweiten Ultraschallsignal 110 entspricht.

Insbesondere kann die Auswerteeinheit 114 dazu ausgebildet sein, die zweite Laufzeit 516 basierend auf der ersten Laufzeit 416 zu korrigieren, wobei die Durchflussgeschwindigkeit des Mediums 106 die korrigierte zweite Laufzeit ist.

Die Bestimmung der zweiten Laufzeit 516 kann wie oben beschreiben basierend auf dem zweiten Empfangssignal 502 erfolgen. Allerdings kann es hier durch einen eher flachen Verlauf der Hüllkurve 510 des zweiten Empfangssignals 502 zu einem Phasensprung kommen. Dies bedeutet, dass alle ausgewerteten Phasen sich um eine Phase entweder nach rechts oder nach links auf der Zeitachse (x-Achse 504) verschieben können. Dies hat zur Folge, dass die zweite Laufzeit 516 einen Fehler von einem ganzzahligen Vielfachen der Periodendauer aufweisen kann.

Dieser Fehler kann mit Hilfe des ersten Laufzeit 416 korrigiert werden. Aus der ersten Laufzeit 416, die basierend auf dem ersten, kurzen Sendesignal 202 ermittelt wurde, kann bestimmt werden, wie lange die Laufzeit (ToF) und damit die Durchflussgeschwindigkeit des Mediums 106 ungefähr sein müsste. Somit kann die genauere, aber um ein ganzzahliges Vielfaches der Periodendauer verfälschte, zweite Laufzeit 516 aus dem zweiten, langen Empfangssignal 502 um die Dauer der ganzzahligen Vielfachen Perioden korrigiert werden. Die Anzahl der ganzzahligen Vielfachen Perioden kann so gewählt werden, dass die Differenz aus zweiter Laufzeit 516 und erster Laufzeit 416 minimal ist.

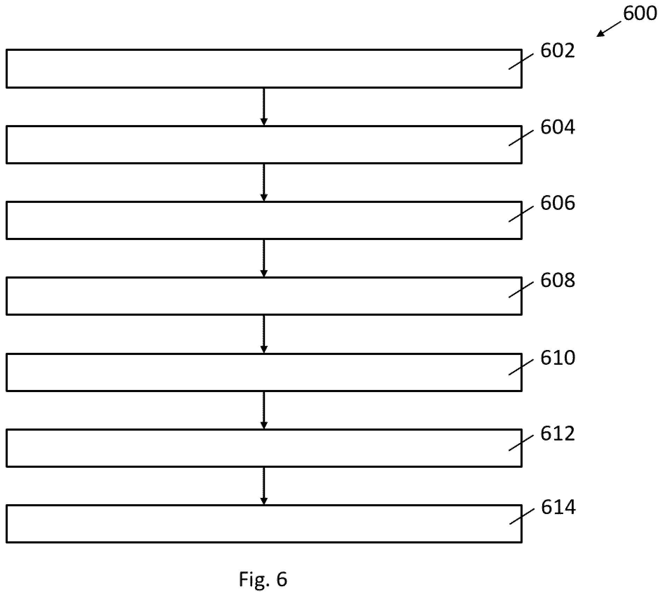

Figur 6 zeigt ein Flussdiagramm 600, welches ein Verfahren zur Bestimmung einer Durchflussgeschwindigkeit eines Mediums 106 mittels der erfindungsgemäßen Ultraschallsensorvorrichtung 100 beschreibt. In Schritt 602 kann ein erstes mit einem Medium 106 übertragenes Ultraschallsignal 108 zu einem ersten Zeitpunkt empfangen werden. In Schritt 604 kann ein zweites mit dem Medium 106 übertragenes Ultraschallsignal 110 zu einem zweiten Zeitpunkt empfangen werden. In Schritt 606 kann eine Hüllkurve 410 des ersten Ultraschallsignals 108 bestimmt werden. In Schritt 608 kann ein Phasenverlauf 512 des zweiten Ultraschallsignals 110 bestimmt werden. In Schritt 610 kann eine erste Laufzeit 416 basierend auf der Hüllkurve 410 des ersten Ultraschallsignals 108 bestimmt werden. In Schritt 612 kann eine zweite Laufzeit 516 basierend auf dem Phasenverlauf 512 des zweiten Ultraschallsignals 110 bestimmt werden. In Schritt 614 kann eine Durchflussgeschwindigkeit des Mediums 106 basierend auf der ersten Laufzeit 416 und der zweiten Laufzeit 516 bestimmt werden.

Gemäß einem Ausführungsbeispiel kann das erste Ultraschallsignal 108 eine geringere Anzahl von Sendepulsen umfassen als das zweite Ultra-schallsignal 110.

Gemäß einem Ausführungsbeispiel kann das erste Ultraschallsignal 108 eine Signalperiode und das zweite Ultraschallsignal 110 eine Vielzahl von Signalperioden umfassen.

Gemäß einem Ausführungsbeispiel kann eine erste Sendefrequenz des ersten Ultraschallsignals 108 verschieden von einer zweiten Sendefrequenz des zweiten Ultraschallsignals 110 sein.

Gemäß einem Ausführungsbeispiel kann das erste Ultraschallsignal 108 und das zweite Ultraschallsignal 110 abwechselnd empfangen werden.

Gemäß einem Ausführungsbeispiel kann das erste Ultraschallsignal 108 nach einem erstmaligen Empfangen des ersten Ultraschallsignals 108 erst nach einer ganzzahligen Vielzahl von Zyklen nach dem zweiten Ultraschallsignal 110 wieder empfangen wird, insbesondere nach 10 Zyklen.

Jeder der Schritte 602, 604, 606, 608, 610, 612, 614 und die weiteren oben beschriebenen Schritte können von der Ultraschallsensorvorrichtung 100 oder einem Ultraschallsensorsystem mit einer Vielzahl von Ultraschallsensorvorrichtungen 100 ausgeführt werden.

Die hierin beschriebene Ultraschallsensorvorrichtung und das Verfahren zur Bestimmung einer Durchflussgeschwindigkeit eines Mediums ist insbesondere vorteilhaft bei einer Durchflussgeschwindigkeitsbestimmung von stark dämpfende Medien, da insbesondere durch das längere Anregen mittels des zweiten Sendesignals ein Empfangspegel des zweiten Empfangssignals höher ist als bei Vorrichtungen und Verfahren die lediglich ein Ultraschallsignal mit kurzer Anregung verwenden.

Zudem kann mit der hierin beschriebenen Ultraschallsensorvorrichtung und dem Verfahren die Messgenauigkeit erhöht bzw. ein Rauschen des Messwerts verringert werden. Dies kann durch die beschriebenen Mittelung mehrerer Nulldurchgänge der Phase, durch ein längeres Sendesignal und damit einem längeren Anregen des Mediums oder durch eine schmalere Filterung im Frequenzbereich erreicht werden. Die Auswertung der zweiten Laufzeit auf Basis mehrerer Nulldurchgänge des Phasenverlaufs führt zu einer genaueren Bestimmung der Laufzeit des Ultraschallsignals bzw. zu einer Reduzierung des Rauschens. Durch die längere Anregung ergibt sich ein höherer Signalpegel, der die Genauigkeit der Laufzeitbestimmung ebenfalls positiv beeinflusst und durch die Möglichkeit einer deutlich schmaleren Fensterung, d.h. einem kleinen Frequenzbereich für die Filterung, des zweiten, langen Ultraschallsignals können Stör- und Rauschsignale deutlich besser unterdrückt werden und die Ultraschallsensorvorrichtung ist robuster gegen Störungen, die in einem ähnlichen Frequenzbereich liegen wie die Sendefrequenz.

Bezugszeichenliste

100 Ultraschallsensorvorrichtung
102 Ultraschallwandler
104 Ultraschallwandler
106 Medium
108 Ultraschallsignal
110 Ultraschallsignal
112 Strömungsrichtung
114 Auswerteeinheit
116 Steuereinheit
118 Kanal
120 Winkel
122 Abstand

200 Signalverlauf eines ersten Sendesignals
202 erstes Sendesignal
204 x-Achse
206 y-Achse
208 Maximum einer Amplitude

300 Signalverlauf eines zweiten Sendesignals
302 zweites Sendesignal

| 304 | x-Achse |
|---|---|
| 306 | y-Achse |
| 308-1 | Maximum einer Amplitude |
| 308-2 | Maximum einer Amplitude |
| 308-3 | Maximum einer Amplitude |
| 308-N | Maximum einer Amplitude |
| 400 | Signalverlauf eines ersten Empfangssignals |
| 402 | erstes Empfangssignal |
| 404 | x-Achse |
| 406 | y-Achse |
| 408 | Maximum einer Amplitude |
| 410 | Hüllkurve |
| 412 | Phasenverlauf |
| 414 | Maximum der Hüllkurve |
| 416 | erste Laufzeit |
| 418 | Nulldurchgang des Phasenverlaufs |
| | |
| 500 | Signalverlauf eines zweiten Empfangssignals |
| 502 | zweites Empfangssignal |
| 504 | x-Achse |
| 506 | y-Achse |
| 508-1 | Maximum einer Amplitude |
| 508-2 | Maximum einer Amplitude |
| 508-3 | Maximum einer Amplitude |
| 508-N | Maximum einer Amplitude |
| 510 | Hüllkurve |
| 512 | Phasenverlauf |
| 514-1 | Nulldurchgang des Phasenverlaufs |
| 514-2 | Nulldurchgang des Phasenverlaufs |
| 514-3 | Nulldurchgang des Phasenverlaufs |
| 514-N | Nulldurchgang des Phasenverlaufs |
| | |
| 600 | Flussdiagramm eines Verfahrens zur Bestimmung einer Durchflussgeschwindigkeit eines Mediums mittels einer Ultraschallsensorvorrichtung |
| 602 | Schritt zum Empfangen eines ersten Ultraschallsignals |
| 604 | Schritt zum Empfangen eines zweiten Ultraschallsignals |
| 606 | Schritt zum Bestimmen einer Hüllkurve des ersten Ultraschallsignals |
| 608 | Schritt zum Bestimmen eines Phasenverlaufs des zweiten Ultraschallsignals |
| 610 | Schritt zum Bestimmen einer ersten Laufzeit |
| 612 | Schritt zum Bestimmen einer zweiten Laufzeit |
| 614 | Schritt zum Bestimmen einer Durchflussgeschwindigkeit des Mediums |

**Patentansprüche**

1. Ultraschallsensorvorrichtung (100) zum Bestimmen einer Durchflussgeschwindigkeit eines Mediums (106), umfassend

einen Ultraschallwandler (102), dazu ausgebildet, um ein erstes mit einem Medium (106) übertragenes Ultraschallsignal (108) zu einem ersten Zeitpunkt und ein zweites mit dem Medium (106) übertragenes Ultraschallsignal (110) zu einem zweiten Zeitpunkt zu empfangen; und
eine Auswerteeinheit (114), dazu ausgebildet,

eine Hüllkurve (410) des ersten Ultraschallsignals (108) zu bestimmen;
einen Phasenverlauf (512) des zweiten Ultraschallsignals (110) zu bestimmen;
eine erste Laufzeit (416) basierend auf der Hüllkurve (410) des ersten Ultraschallsignals (108) zu bestimmen;
eine zweite Laufzeit (516) basierend auf dem Phasenverlauf (512) des zweiten Ultraschallsignals (110) zu bestimmen; und

eine Durchflussgeschwindigkeit des Mediums (106) basierend auf der ersten Laufzeit (416) und der zweiten Laufzeit (516) zu bestimmen.

2. Ultraschallsensorvorrichtung (100) nach Anspruch 1, ferner umfassend
einen zweiten Ultraschallwandler (104), dazu ausgebildet, das erste Ultraschallsignal (108) zu dem ersten Zeitpunkt und das zweite Ultraschallsignal (110) zu dem zweiten Zeitpunkt auszusenden,
wobei der Ultraschallwandler (102) und der zweite Ultraschallwandler (104) einander zugewandt angeordnet sind.

3. Ultraschallsensorvorrichtung (100) nach Anspruch 1 oder 2, ferner umfassend
eine Steuereinheit (116), dazu ausgebildet, den Ultraschallwandler (102) zu steuern, das erste Ultraschallsignal (108) und das zweite Ultra-schallsignal (110) zu empfangen,

wobei das erste Ultraschallsignal (108) und das zweite Ultraschallsignal (110) abwechselnd empfangen werden, oder
wobei das erste Ultraschallsignal (108) nach einem erstmaligen Empfangen des ersten Ultraschallsignals (108) erst nach einer ganzzahligen Vielzahl von Zyklen nach dem zweiten Ultraschallsignal (110) wieder empfangen wird, insbesondere nach 10 Zyklen.

4. Ultraschallsensorvorrichtung (100) nach zumindest einem der Ansprüche 1 bis 3,
wobei die Auswerteeinheit (114) dazu ausgebildet ist, das erste Ultraschallsignal (108) von einem Zeitbereich in ein erstes analytisches Signal in einen Frequenzbereich und das zweite Ultraschallsignal (110) von dem Zeitbereich in ein zweites analytisches Signal in den Frequenzbereich zu transformieren.

5. Ultraschallsensorvorrichtung (100) nach Anspruch 4,

wobei die Auswerteeinheit (114) dazu ausgebildet ist, das erste analytische Signal und das zweite analytische Signal zu filtern,
wobei eine erste Filterbreite für das Filtern des ersten analytischen Signals größer ist als eine zweite Filterbreite für das Filtern des zweiten analytischen Signals.

6. Ultraschallsensorvorrichtung (100) nach Anspruch 5,
wobei die Auswerteeinheit (114) dazu ausgebildet ist, das erste gefilterte analytische Signal und das zweite gefilterte analytische Signal von dem Frequenzbereich in den Zeitbereich zu transformieren.

7. Ultraschallsensorvorrichtung (100) nach zumindest einem der Ansprüche 1 bis 6,
wobei die Auswerteeinheit (114) dazu ausgebildet ist,

ein Maximum (414) der Hüllkurve (410) des ersten Ultraschallsignals (108) zu bestimmen,
zumindest zwei Nulldurchgänge (514-1, 514-2, 514-3, ... 514-N) des Phasenverlaufs (512) des zweiten Ultraschallsignals (110) zu bestimmen,
die erste Laufzeit (416) basierend auf dem Maximum (414) der Hüllkurve (410) des ersten Ultraschallsignals (108) zu bestimmen, und
die zweite Laufzeit (516) basierend auf den zumindest zwei Nulldurchgängen (514-1, 514-2, 514-3, ... 514-N) des Phasenverlauf (512) des zweiten Ultraschallsignals (110) zu bestimmen.

8. Ultraschallsensorvorrichtung (100) nach Anspruch 7,
wobei die Auswerteeinheit (114) dazu ausgebildet ist,
das Maximum (414) der Hüllkurve (410) des ersten Ultraschallsignals (108) mittels einer Parabel zu bestimmen,
wobei ein Scheitelpunkt der Parabel mit dem Maximum (414) der Hüllkurve (410) übereinstimmt.

9. Ultraschallsensorvorrichtung (100) nach zumindest einem der Ansprüche 1 bis 8,
wobei die Auswerteeinheit (114) dazu ausgebildet ist, die zweite Laufzeit (516) des zweiten Ultraschallsignals (110) basierend auf der ersten Laufzeit (416) des ersten Ultraschallsignals (108) zu korrigieren, wobei die Durchflussgeschwindigkeit des Mediums (106) die korrigierte zweite Laufzeit ist.

10. Verfahren zur Bestimmung einer Durchflussgeschwindigkeit eines Mediums (106) mittels einer Ultraschallsensorvorrichtung (100) nach einem der Ansprüche 1 bis 9, umfassend:

Empfangen (602) eines ersten mit einem Medium (106) übertragenen Ultraschallsignals (108) zu einem ersten Zeitpunkt;

Empfangen (604) eines zweiten mit dem Medium (106) übertragenen Ultraschallsignals (110) zu einem zweiten Zeitpunkt;

Bestimmen (606) einer Hüllkurve (410) des ersten Ultraschallsignals (108);

Bestimmen (608) eines Phasenverlaufs (512) des zweiten Ultraschallsignals (110);

Bestimmen (610) einer ersten Laufzeit (416) basierend auf der Hüllkurve (410) des ersten Ultraschallsignals (108);

Bestimmen (612) einer zweiten Laufzeit (516) basierend auf dem Phasenverlauf (512) des zweiten Ultraschallsignals (110); und

Bestimmen (614) einer Durchflussgeschwindigkeit des Mediums (106) basierend auf der ersten Laufzeit (416) und der zweiten Laufzeit (516).

11. Verfahren nach Anspruch 10,
wobei das erste Ultraschallsignal (108) eine geringere Anzahl von Sendepulsen umfasst als das zweite Ultraschallsignal (110).

12. Verfahren nach zumindest einem der Ansprüche 10 oder 11,
wobei das erste Ultraschallsignal (108) eine Signalperiode und das zweite Ultraschallsignal (110) eine Vielzahl von Signalperioden umfasst.

13. Verfahren nach zumindest einem der Ansprüche 10 bis 12,
wobei eine erste Sendefrequenz des ersten Ultraschallsignals (108) verschieden ist von einer zweiten Sendefrequenz des zweiten Ultraschallsignals (110).

14. Verfahren nach zumindest einem der Ansprüche 10 bis 13,

wobei das erste Ultraschallsignal (108) und das zweite Ultraschallsignal (110) abwechselnd empfangen werden, oder

wobei das erste Ultraschallsignal (108) nach einem erstmaligen Empfangen des ersten Ultraschallsignals (108) erst nach einer ganzzahligen Vielzahl von Zyklen nach dem zweiten Ultraschallsignal (110) wieder empfangen wird, insbesondere nach 10 Zyklen.

15. Ultraschallsensorsystem, umfassend
eine Vielzahl von Ultraschallsensorvorrichtungen (100) nach zumindest einem der Ansprüche 1 bis 9,
wobei zumindest zwei Ultraschallwandler (102, 104) in einer Wandung eines Kanals (118) in dem das Medium (106) strömt einander zugewandt angeordnet sind.

Fig. 1

Fig. 2

Fig. 3

Fig. 4

Fig. 5

600

602

604

606

608

610

612

614

Fig. 6

**EUROPÄISCHER RECHERCHENBERICHT**

Nummer der Anmeldung

EP 24 21 2133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2012/266676 A1 (MUELLER ROLAND [DE] ET AL) 25. Oktober 2012 (2012-10-25) * Abbildung 6 * * Absätze [0047], [0048], [0083] * ----- | 1-15 | INV. G01F1/667 |
| A | US 9 383 239 B2 (DRACHMANN JENS [DK]; APATOR MIITORS APS [DK]) 5. Juli 2016 (2016-07-05) * Spalte 4, Zeile 11 - Zeile 37 * ----- | 1-15 | |
| A | US 2023/221155 A1 (BENKERT ANDREAS [DE] ET AL) 13. Juli 2023 (2023-07-13) * Absatz [0008] * ----- | 1-15 | |

RECHERCHIERTE SACHGEBIETE (IPC)

G01F

Der vorliegende Recherchenbericht wurde für alle Patentansprüche erstellt

| Recherchenort | Abschlußdatum der Recherche | Prüfer |
|---|---|---|
| Den Haag | 4. April 2025 | Quertemont, Eric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 21 2133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2025

| Im Recherchenbericht angeführtes Patentdokument | Datum der Veröffentlichung | Mitglied(er) der Patentfamilie | Datum der Veröffentlichung |
|---|---|---|---|
| US 2012266676 A1 | 25-10-2012 | DE 102009049067 A1 | 14-04-2011 |
| | | EP 2488834 A1 | 22-08-2012 |
| | | JP 5490246 B2 | 14-05-2014 |
| | | JP 2013507624 A | 04-03-2013 |
| | | US 2012266676 A1 | 25-10-2012 |
| | | WO 2011045109 A1 | 21-04-2011 |
| US 9383239 B2 | 05-07-2016 | BR 112012027581 A2 | 09-08-2016 |
| | | CN 102869959 A | 09-01-2013 |
| | | CN 105865548 A | 17-08-2016 |
| | | DK 2564170 T3 | 03-12-2018 |
| | | EP 2383550 A1 | 02-11-2011 |
| | | EP 2564170 A2 | 06-03-2013 |
| | | EP 3421946 A1 | 02-01-2019 |
| | | EP 3842767 A1 | 30-06-2021 |
| | | EP 4296630 A2 | 27-12-2023 |
| | | PL 3842767 T3 | 26-02-2024 |
| | | US 2013047695 A1 | 28-02-2013 |
| | | US 2016282170 A1 | 29-09-2016 |
| | | US 2020217708 A1 | 09-07-2020 |
| | | WO 2011134470 A2 | 03-11-2011 |
| US 2023221155 A1 | 13-07-2023 | CN 116429192 A | 14-07-2023 |
| | | DE 102022100677 A1 | 13-07-2023 |
| | | EP 4212829 A1 | 19-07-2023 |
| | | US 2023221155 A1 | 13-07-2023 |

EPO FORM P0461

Für nähere Einzelheiten zu diesem Anhang : siehe Amtsblatt des Europäischen Patentamts, Nr.12/82